# EUROPEAN PATENT SPECIFICATION

(11) **EP 3 573 193 B1**
(45) Date of publication and mention of the grant of the patent: **31.07.2024**
(21) Application number: 19185401.7
(22) Date of filing: 18.07.2014
(51) Int. Cl.: G02B 6/38

(54) **SEALING ASSEMBLY**
DICHTUNGSANORDNUNG
ENSEMBLE D'ÉTANCHÉITÉ

(43) Date of publication of application: 27.11.2019
(62) Divisional of application: 14177612.0
(73) Proprietor: TE Connectivity Nederland B.V., 5222 AR 's-Hertogenbosch (NL)
(72) Inventor: Mooij, Albert Pieter Jan, 5321 SB Hedel (NL); Daamen, Ronald Nico Adriaan, 5262 DG Vught (NL); Dendas, Freddy Jean Philip, 3600 Genk (BE); Drijfhout, Tekke, 5388 CG Nistelrode (NL)
(74) Representative: Grünecker Patent- und Rechtsanwälte PartG mbB

(56) References cited:
- FR-A1- 2 579 837
- US-A- 5 644 104
- US-A1- 2004 177 989

## Description

The application relates to an enclosure assembly for mounting at various depth positions and for receiving at least one connector terminating a data and/or power transmission line. The present invention relates to a kit, comprising at least one sealing sub-assembly for such an enclosure assembly.

Enclosure assemblies are commonly used to accommodate at least one of type of commonly standardized connectors in order to protect them against harmful environmental impacts, such as shock, strain, corrosive substances, chemical and/or solar exposure. The transmission line may be part of a cable comprising at least one transmission line. The cable may be terminated by a terminating arrangement or sub-assembly, which may comprise a fixator or end cap to be positioned at an end section of the cable where the at least one transmission line exits the cable. The fixator may be used to attach the connector and/or the transmission line within the enclosure assembly. Sealing sub-assemblies are for instance known from FR 2 579 837 A1 and US 2004/177 989 A1 which show a cable grip for electrical installations and a screwed cable gland, respectively. US 5,644,104 A discloses an assembly for permitting the transmission of an electrical signal between areas. A housing defines first and second areas having different pressures. A sleeve threadingly engaged with the housing defines a port, and an electrically conductive button is disposed at least partially in the port. An input wire extending into the port is connected to the button at a first point, and an output wire is connected to the button at a second point and extends into the second area. A first compressible insulator is disposed between the button and the housing, and a second compressible insulator is disposed between the button and the sleeve. An insulative O-ring is disposed between the first insulator and the second insulator, and a third insulator is disposed between the sleeve and the second insulator.

For example, the cable might be an optical fibre cable and the transmission line may be an optical fibre. Optical fibres may come as units comprising a fibre element with several individual fibres. The fibres may be bundled to bundles comprising several fibres. Such a bundle or several bundles may be accommodated within a cable. As the fibres themselves are rather long and thin and therefore prone to damage, e.g. by snapping and cracking, it is desired to provide a strain relief in order to eliminate any stresses which could act on the fibres themselves.

The enclosure assembly together with the at least one connector received therein may be regarded as an electrical and/or optical plug connector adapted to be mated with a respective mating plug connector. The mating plug connector may therefore comprise a mating enclosure assembly and/or a mating connector. The enclosure assembly may be adapted to be mated with the mating enclosure assembly while at the same time plugging the connector into the mating connector or vice versa. The mating connector may e.g. be part of a housing for electronic/electrical equipment and may form a bulkhead at or in this housing. The dimensions of the mating plug connector, especially of the position of the mating connector within or with respect to the mating enclosure assembly along a longitudinal direction of the enclosure assembly and/or plug direction of the plug connector may vary from manufacturer to manufacturer and/or application to application.

It is an object of the present invention to provide a kit with a sealing sub-assembly and a housing sub-assembly, which may effectively support and protect the sealing sub-assemble.

This solution has the decisive advantage over enclosure assemblies known from the prior art that the position of the connector and/or a connector sub-assembly comprising the connector with respect to the enclosure assembly may be adapted to the mating enclosure assembly and/or mating connector at hand. In other words, a plug connector comprising the enclosure assembly and a terminating assembly may be easily adjusted to a mating plug connector choosing one of the at least two retaining positions. Therefore, the connector may be variably received in an interior space which may be provided by the housing sub-assembly and/or the telescoping sub-assembly according to the at least two retaining positions. A position of the connector within the interior space may be chosen which allows to connect the connector to a mating connector and, at the same time, bring the enclosure assembly in engagement with a mating enclosure assembly.

The invention is set out in the appended set of claims.

The problem underlying the present application is solved by the present invention of a kit, comprising at least one sealing sub-assembly for an enclosure assembly, which sealing sub-assembly comprises at least one annular sealing element and at least one washer, the kit further comprising an inner body of a housing sub-assembly, said inner body being provided with a flange adapted and arranged to support the sealing sub-assembly, in particular one of the washers thereof; wherein the flange is formed at an end of the inner body and provides a pressing surface; and the kit further comprising an outer shell of a housing sub-assembly, the outer shell being configured to at least in sections and take up the inner body and comprising a volume for receiving the sealing sub-assembly, wherein the outer shell comprises a counter sealing section provided by an inner circumference of the outer shell and a stop, where the inner circumference of the outer shell narrows with respect to the sealing section.

The sealing sub-assembly may further be arranged concentrically to a middle axis of the enclosure assembly. The middle axis may run essentially in parallel to the longitudinal direction. The sealing element may be expanded in a radial direction which may extend essentially perpendicularly to the longitudinal direction, thereby abutting the housing sub-assembly as well as the telescoping sub-assembly in and/or against the radial direction. This allows for a closely fitting accommodation for the sealing element and reliably sealing up between the housing sub-assembly and telescoping sub-assembly. A sealing section of the telescoping sub-assembly may extend along the longitudinal direction and may have at least the length of the retaining section, measured essentially in parallel to the longitudinal direction. Thereby, the telescoping sub-assembly may be sealed up in different positions in the longitudinal direction with respect to the housing sub-assembly. The sealing section may be formed e.g. at the retainer bushing.

In view of the requirements for enclosure assemblies and the variation of mating plug connectors and/or mating enclosure assemblies, it is desirable to provide a rugged, safe, sealable and easy-to-handle enclosure assembly which may be used for different types of mating enclosure assemblies and mating plug connectors.

One aspect disclosed is an enclosure assembly adapted for receiving at least one connector terminating a data and/or port and/or power transmission line in at least two different retaining positions distanced from each other along a longitudinal direction of the enclosure assembly, comprising at least one housing sub-assembly and a telescoping sub-assembly with a retaining section providing the retaining positions where, at least in a retained state and/or fully assembled state of the enclosure assembly, the telescoping sub-assembly is held within the housing sub-assembly in a manner at least being non-relocatable in the longitudinal direction with respect to the housing sub-assembly.

It is advantageous if an enclosure assembly can variably be used for different types of mating plug connectors, i.e. mating enclosure assemblies and mating connectors.

It is also advantageous that the enclosure assembly provides for shielding with a shielding element.

According to a first possible further example disclosed, the retaining section may provide multiple retaining positions distanced from each other along the longitudinal direction. The multiple retaining positions may be arranged between the at least two retaining positions which may be a maximally expanded position and a minimally expanded position, respectively. Thereby, the position of the connector with respect to the enclosure assembly may be easily adjusted to multiple different mating connectors and mating enclosure assemblies.

The retaining positions may be distanced from each other along the longitudinal direction under essentially equal increments. The incrementation of a range within which the enclosure assembly may be maximally or minimally expanded helps to securely retain the telescoping sub-assembly within the housing sub-assembly, while giving tactile and/or audible feedback that one of the incremented retaining positions is assumed.

The retaining positions may be defined by at least two ribs at least partially extending along an outer circumference of the telescoping sub-assembly. The ribs may be formed annularly along an outer circumference of the telescoping sub-assembly, e.g. between grooves, and may provide a toothing which may be brought into mesh with a respective toothing so that the telescoping sub-assembly may be securely held in the desired retaining position.

A shielding element may be part of the housing-sub-assembly. In an unretained state and/or a pre-assembled state of the enclosure assembly, the telescoping sub-assembly may be held moveable within the housing sub-assembly along the longitudinal direction. Thereby, the position of the telescoping sub-assembly within the housing sub-assembly may be easily adjusted. The connector and/or a fixator on a cable may be supported at the telescoping sub-assembly which may be moved along the longitudinal direction into a desired position together with the connector and/or fixator.

The retaining section may be formed at a retainer bushing of the telescoping sub-assembly. The retainer bushing may be shaped at a sleeve and may provide at least parts of the interior space of the enclosure assembly. The retainer bushing may be adapted to hold a fixator of a terminating assembly sitting on an end section of a cable including the at least one transmission line. Hence, the fixator may be first supported at and/or within the retainer bushing, which may then be inserted into the housing sub-assembly.

The telescoping sub-assembly may comprise at least one spring retainer comprising at least one retaining element, interacting with the retaining section at least in the retained state and/or fully assembled state, whereby movement of the spring retainer and the retainer bushing with respect to each other are inhibited at least along the longitudinal direction. The spring retainer may provide counter retaining elements interacting with retaining elements of the retaining section, such that they e.g. interleave along the longitudinal direction in order to inhibit movements of the spring retainer with respect to the retainer bushing. The spring retainer may be supported at the housing sub-assembly in the fully assembled position in and/or against the longitudinal direction. Thereby, the spring retainer may be used to support the telescoping sub-assembly within the housing sub-assembly at least in the retained state and/orfully assembled state. By interacting with the retainer bushing, it may be supported at the housing sub-assembly via the spring retainer in and/or against the longitudinal direction. For example, the retaining element may be used to latch, lock and/or block the spring retainer with or at, respectively, the housing sub-assembly.

In the retained state and/or fully assembled state, the spring retainer may be held in a retaining position at an actuating organ of the spring retainer by an actuating section formed at the housing sub-assembly. The actuating organ may be formed as a protrusion, e.g. a stud, lug or alike, sitting in a latching, locking and/or blocking opening and/or being pushed into a retaining position when being moved along a bevel at e.g. an inner circumference of the housing sub-assembly into the retaining position. The retaining position and/or retained state may be reached e.g. when displacing the telescoping sub-assembly with respect to the housing sub-assembly by a pre-defined amount, especially by displacing the housing sub-assembly with respect to the spring retainer by a pre-defined amount when transferring an enclosure assembly from a pre-locked position into a locked position and/or from a pre-assembled state into the fully assembled state.

A further aspect disclosed is a housing sub-assembly according to an example of the present application that may comprise an inner body, an outer shell which, at least in a fully assembled state of the enclosure assembly, at least in sections takes up the inner body, and a locking mechanism connecting the inner body to the outer shell at least in the fully assembled state, wherein the locking mechanism comprises at least one first bayonet coupling formed at the inner body as well as the outer shell and inhibiting movements of the inner body with respect to the outer shell, at least in the fully assembled state substantially in the longitudinal direction of the enclosure assembly. The at least one first bayonet coupling may require movements of the inner body and the outer shell with respect to each other, essentially transversely to the longitudinal direction, thereby enabling to secure the housing sub-assembly in the fully assembled state without considerably moving it with respect to the telescoping sub-assembly, especially the retainer bushing. The spring retainer may at the same time be transferred into the retaining position when bringing the housing sub-assembly from the pre-locked into a locked state by actuating the bayonet coupling. The bayonet coupling may provide a pre-defined movement for the enclosure assembly, especially the spring retainer and/or the retainer bushing, i.e. the telescoping sub-assembly, from the unretained state into the retained state, when the desired one of the at least two desired retaining positions is secured.

The first bayonet coupling may comprise at least one first slot formed in the outer shell and is adapted to take up at least one first pin formed at the inner body. Thereby, the housing sub-assembly may easily provide the first bayonet coupling.

The locking mechanism may further comprise at least one second slot formed at the outer shell as a part of a second bayonet coupling for connecting the enclosure assembly to a mating enclosure assembly receiving a mating connector. Hence, the locking mechanism may be used as a double locking mechanism for connecting the outer shell to the inner body and the enclosure assembly to the mating enclosure assembly. At least one spring element of the enclosure assembly may be used as part of the locking mechanism for the first bayonet coupling as well as the second bayonet coupling.

The at least one first slot and second slot may be connected to each other by a transitional slot. A width of the first slot and/or the transitional slot may be smaller than a width of the second slot. Thereby, a second pin of the mating enclosure assembly may not accidentally enter the first slot, which would hence be reserved for the first pin. The at least one second slot may open to the outside of the enclosure assembly through an insertion opening. The insertion opening may serve for introducing both the first and the second pin into the first slot and second slot, respectively.

A further aspect disclosed is an enclosure assembly according to an example of the present application that may comprise a sealing sub-assembly with at least one annular sealing element and at least one washer arranged between the sealing element and at least one of the housing sub-assembly and the telescoping sub-assembly at the latest in the locked position, retained state and/or fully assembled state, and contributing to a compression of the at least one sealing element in the longitudinal direction. The at least one washer may allow to rotate the housing sub-assembly and/or the telescoping sub-assembly with respect to the sealing element which be formed e.g. from a highly frictional material, such as rubber or alike, when locking the housing sub-assembly in a turning movement. This is especially advantageous if the housing sub-assembly is provided with a first bayonet coupling for connecting the outer shell to the inner body.

In a further aspect disclosed, a mating enclosure assembly and/or mating plug element, which may comprise the mating enclosure assembly may be adapted to be plugged together and connected to an enclosure assembly as disclosed. Therefore, the mating enclosure assembly may e.g. be provided with at least one of the above-mentioned second pin in order to constitute a second bayonet lock. The at least one second pin may be formed e.g. as an outer circumference of a collar of the mating enclosure assembly. The collar may be formed at a mating plug section of the mating enclosure assembly to be inserted to a plug portion of the enclosure assembly or vice versa.

The examples of the application disclosed and embodiments of the invention will be described in more detail by way of example hereinafter with reference to the accompanying drawings, which illustrate advantageous examples and embodiments. The disclosed examples and described embodiments are only possible configurations on which the individual features may, however, as described above, be implemented independently of each other or be omitted. Corresponding elements illustrated in the drawings are provided with the same reference signs. Parts of the description relating to the same elements in different drawings are omitted.

In the drawings:
- Fig. 1: is a schematic perspective view of a plug connector comprising an enclosure assembly according to an example of the present application, receiving at least one connector terminating a transmission line in a fully assembled state of the enclosure assembly;
- Fig. 2: is a schematic perspective view of a terminating arrangement for a cable and/or transmission line, provided with a retainer bushing as part of a telescoping assembly according to an example of the present application;
- Fig. 3: is a schematic perspective exploded view of the terminating arrangement, the cable and the transmission line provided with the retainer bushing shown in Fig. 2;
- Fig. 4: is a schematic perspective exploded view of a housing sub-assembly with a shielding element, a sealing sub-assembly according to an embodiment of the invention, and a spring retainer as part of the sub-assembly of an enclosure assembly according to an example of the present application;
- Fig. 5: is a schematic cross-sectional view of a detail of the enclosure assembly and the terminating assembly shown in Figs. 1 to 4 in an unretained state and/or a pre-assembled state along a middle axis of the enclosure assembly;
- Fig. 6: is a schematic cross-sectional view of a detail of the enclosure assembly and the terminating assembly shown in Fig. 5 in a fully retained and/or assembled state;
- Fig. 7: is a schematic cross-sectional view of the enclosure assembly in the fully assembled state in a minimally expanded retaining position along the middle axis;
- Fig. 8: is a schematic cross-sectional view of the enclosure assembly and the terminating assembly in the fully assembled position in a maximally expanded retaining position along the middle axis;
- Fig. 9: is a schematic perspective view of a mating enclosure assembly according to an example of the present application;
- Fig. 10: is another schematic perspective view of the mating enclosure assembly shown in Fig. 9;
- Fig. 11: is a schematic perspective view of a detail of the enclosure assembly shown in Figs. 1 to 8 in a fully assembled and pre-locked position with the mating enclosure assembly shown in Figs. 9 and 10 in a pre-mated position;
- Fig. 12: is another schematic perspective view of the enclosure assembly shown in Figs. 1 to 8 in the fully assembled and pre-locked position with a mating enclosure assembly shown in Figs. 9 and 10 shown in half-mated position; and
- Fig. 13: is a schematic perspective view of a locking mechanism of the enclosure assembly shown in Figs. 1 to 8 and the mating enclosure assembly shown in Figs. 9 and 10 in the fully assembled state as well as locked position and fully mated position;
- Fig. 14: is a schematic perspective exploded view of a housing sub-assembly with a shielding element, a sealing sub-assembly according to the present invention and a spring retainer as part of the sub-assembly of another embodiment of an enclosure assembly with small modifications compared to the example shown in Fig. 4.

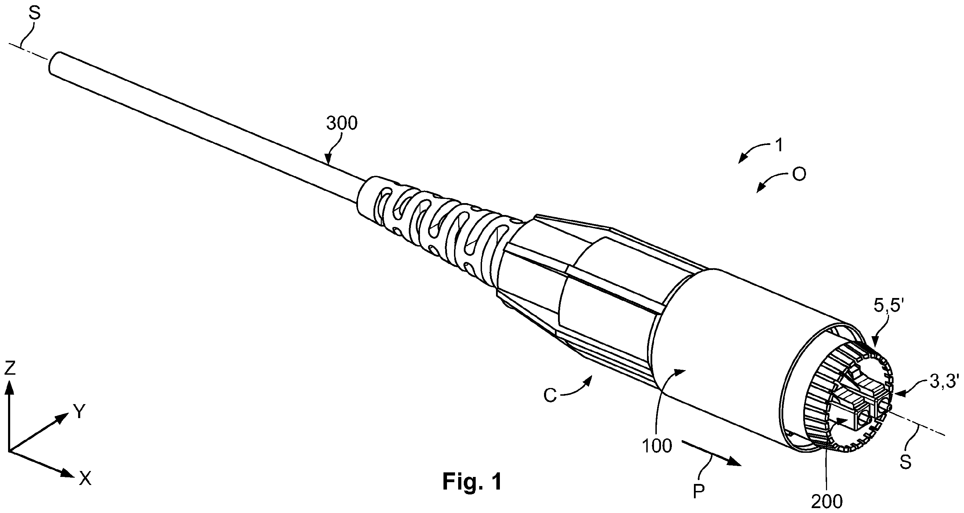

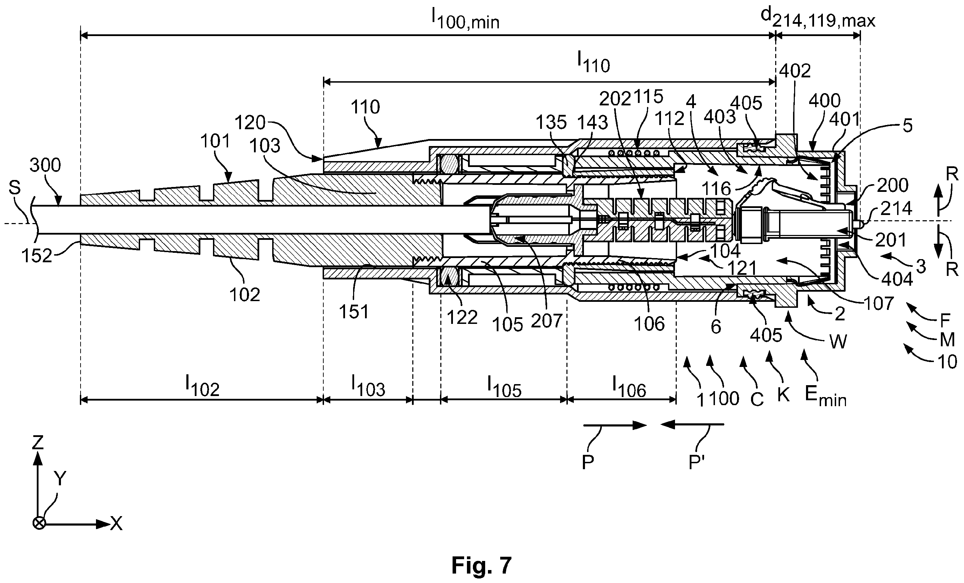

Fig. 1 is a schematic perspective view of a plug connector 1 comprising an example of an enclosure assembly 100 according to the present application. The enclosure assembly 100 is an fully assembled state C and surrounds a terminating arrangement 200 terminating a cable 300 for data and/or electrical power transmission. A longitudinal axis S of the plug connector 1, the enclosure assembly 100, the terminating arrangement 200 and the cable 300 runs centrally therethrough along a longitudinal direction X of said components and may also be regarded as a central axis defining an axial direction S. The longitudinal direction X runs essentially perpendicularly to a transverse direction Y. The longitudinal direction X and the transverse direction Y both run perpendicularlyto a height or vertical direction Z. Together, the longitudinal direction X, the transverse direction Y and the height direction Z constitute a Cartesian coordinate system referring to the plug connector 1 and its components, i.e. the enclosure assembly 100, the terminating arrangement 200 and the cable 300. In a plug direction P extending in parallel to the longitudinal direction X and hence also to the longitudinal axis S, the plug connector 1 may be mated, i.e. plug together, with a mating plug connector 2 (see Figs. 7 to 13). All mentions of a rear or back may refer to a direction facing opposite to the longitudinal directions. All mentions of front or before may refer to a direction facing in the longitudinal direction X.

The plug connector 1 may provide a plug face 3, 3' which may be adapted to different embodiments of mating plug faces 4, 4' of the mating connector2, 2'. The mating connector 2, 2' can also include a cage with a transceiver. The plug face 3, 3' may be regarded as a structure provided by the enclosure assembly 100 and the terminating assembly 200 facing into the plug direction P. The mating plug face 4, 4' may be regarded as a structure of the mating connector 2, 2' which in different embodiments may comprise different and/or differently positioned mating connectors (not shown). Plug face 3, 3' may be regarded as a plug portion 5, 5' which may be formed as a plug. The mating plug face 4, 4' may be regarded as a part of a mating plug portion 6, 6' which may be formed as a receptacle (see Figs. 7 to 13). Because of the multiple types of connectors that can be used within this solution in other possible examples of an enclosure assembly 100 according to the present application, the provision of a plug and a receptacle could also be vice versa.

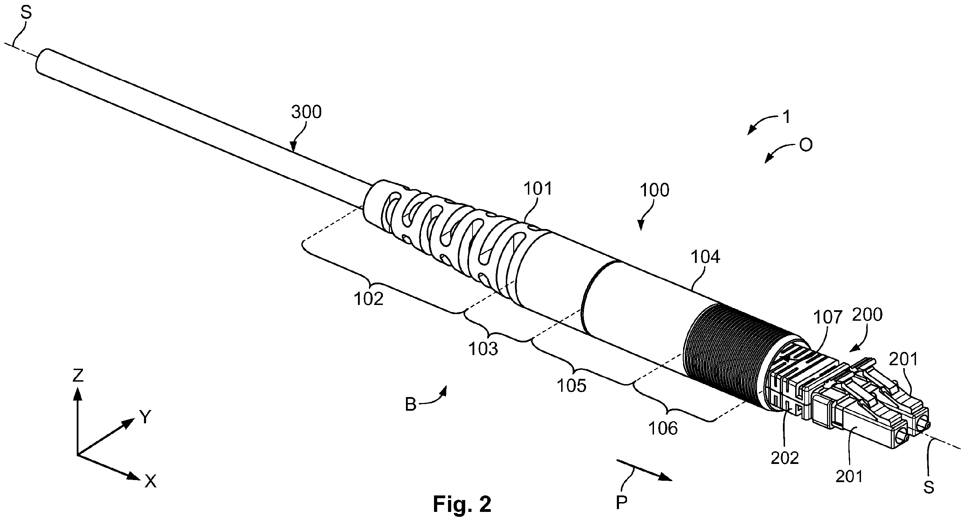

Fig. 2 is a schematic perspective view of the plug connector 1, where parts of the enclosure assembly 100 have been removed so that the connector 1 and in particular the enclosure assembly 100 are illustrated in a pre-assembled state B. The enclosure assembly 100 comprises a strain relief element 101 which, when assembling the plug connector 1, should be placed around the outer circumference of the cable 300 first. The strain relief element 101 has a flexible section 102, where its outer diameter tapers against the longitudinal direction X towards the bare cable 300 so that the strain relief element 101 can flexibly move together with the cable 300 held therein. The flexible section 102 merges with a holding section 103 of the strain relief element, where it has an essentially cylindrical shape.

At the holding section 103, the strain relief element 101 is connected to a retainer bushing 104 of the enclosure assembly 100, in particular to a sealing section 105 thereof, which essentially has the same outer diameter as the holding section 103 of the strain relief element 101. Next to the sealing section 105 along the longitudinal direction X, the retainer bushing 104 is provided with a retaining section 106 for retaining the retainer bushing 104 so that movements thereof along the longitudinal direction X with respect to the terminating arrangement 200 and/or the cable 300 are inhibited. The retainer bushing 104 provides at least a part of an interior space 107 of the enclosure assembly 100 for receiving at least sections of the terminating arrangement 200. The terminating arrangement 200 comprises at least one connector, which may e.g. as shown herein be an LC-type connector for establishing an optical data transmission link. In particular, the terminating arrangement 200 comprises two connectors 201, which are both held by a guiding support 202. This guiding support 202 allows for some flexibility, mainly in the vertical direction Z and in the transverse direction Y perpendicularly to the plug direction P to compensate for off-set and tolerances at the mating connector side of the connection.

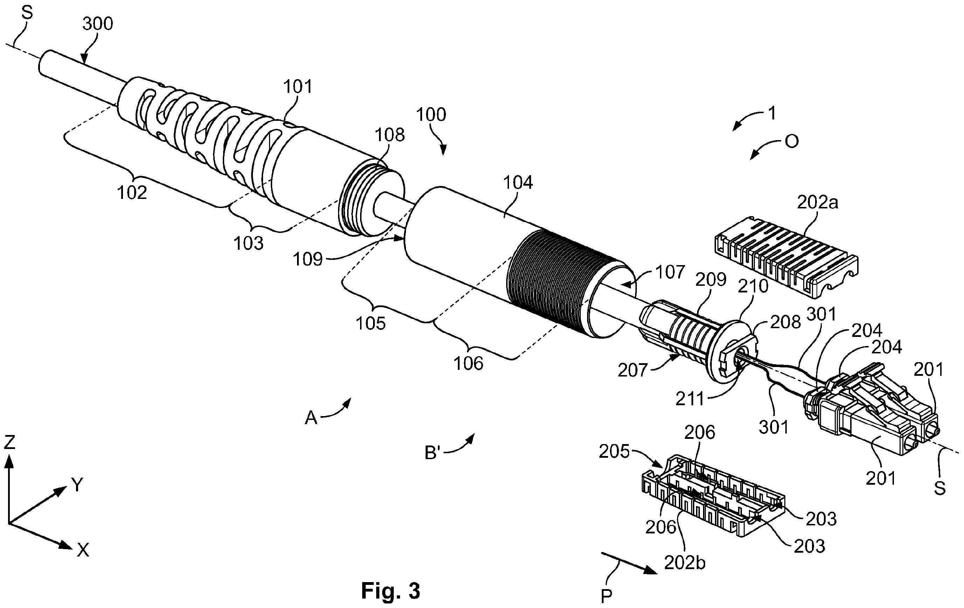

Fig. 3 shows the plug connector 1 in an unassembled state A. Here it becomes apparent that the guiding support 202 comprises an upper shell 202a and a lower shell 202b, together providing a seating 203 for each of the connectors 201, in particular for a mounting section 204 thereof or an adapter piece connected thereto. Next to a holding structure 205 of the guiding support 202, channels 206 for transmission lines 301 of the cable are formed. The holding structure 205 serves for receiving a fixator 207 of the terminating arrangement, particularly a fixation member 208. The fixator 207 terminates the cable 300 and closely encompasses the cable 300 with its clamping section 209. The fixator further provides a support element 210 in the form of a collar for supporting the fixator 207 within the retainer bushing 104. A through-hole 211 of the fixator 207 serves for guiding the e.g. two transmission lines 301 of the cable 300 towards the guiding support 202. The transmission lines 301 exit the fixator 207 from the through-hole 211, which is formed and arranged concentrically to the fixation member 208, and are then loosely to be guided within the respective channel 206 of the guiding support 202 in order to then enter the terminals 201 at the respective mounting section 204. Thereby, the guiding support 202 provides strain relief for the transmission lines 301 between the fixator 207, in particular the fixation member 208 thereof and the connectors 201, in particular each of the mounting sections 204 thereof.

Further it becomes apparent in Fig. 3 that, in the unassembled state A, the strain relief element 201 is detached from the retainer bushing 104. Both the strain relief element 101 and the retainer bushing 104 are slid back on the cable 300 opposite to the longitudinal direction X compared to their respective positions shown in Figs. 1 and 2. For firmly connecting the strain relief element 101 to the retainer bushing 104, the strain relief element 101 is provided with an outside threading 108. Accordingly, the retainer bushing 104 is provided with an internal threading 109, so that they may be screwed together and are immobilized with respect to each other in and opposite to the longitudinal direction X.

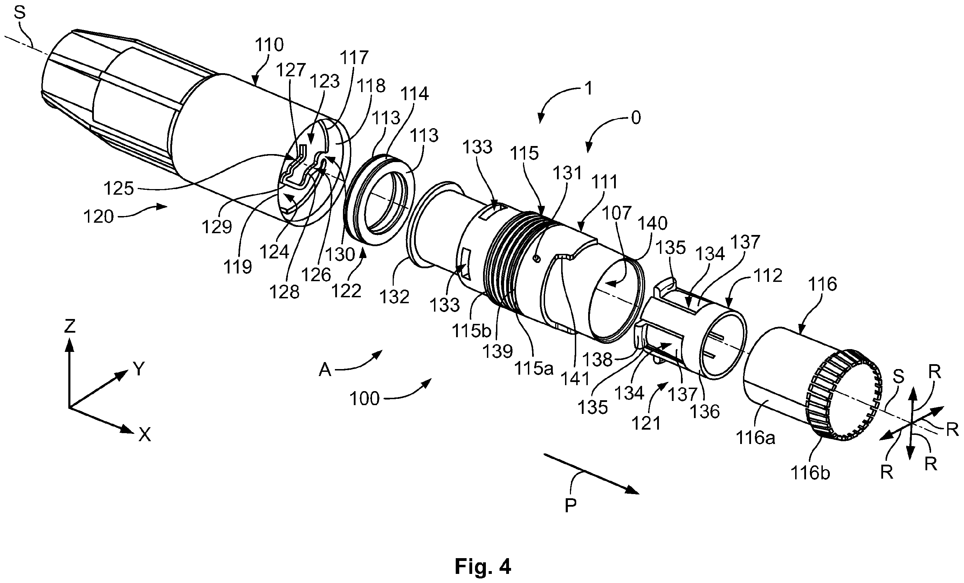

Fig. 4 shows the parts of the enclosure assembly 100 that are removed from the assembly and not shown in the views illustrated in Figs. 2 and 3. In Fig. 4 the parts are shown in a schematic perspective view exploded view. The enclosure assembly 100 further comprises an outer shell 110, an inner body 111, a spring retainer 112, two washers 113, a sealing element 114, a spring element 115 and a shielding element 116. The outer body is provided with a step 117 extending along its inner circumference, as well as with a sealing collar 118 and a front edge 119. The outer shell 110, the inner body 111 and the shielding element 116 constitute part of a housing sub-assembly 120 of the enclosure assembly 100. The retainer bushing 104 and the spring retainer 112 constitute parts of a telescoping sub-assembly 121 of the enclosure assembly 100. The washers 113 and the sealing element 114 constitute parts of an embodiment of a sealing sub-assembly 122 that may be comprised in the enclosure assembly 100.

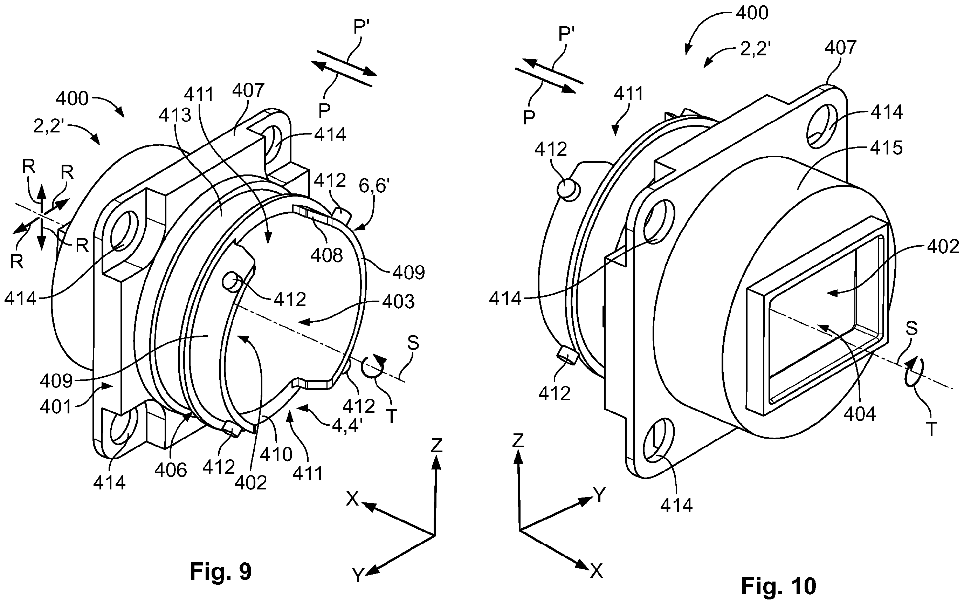

The outer shell 110 provides parts of a locking mechanism 123 of the enclosure assembly 100 and a volume 124 for receiving at least sections of the telescoping sub-assembly 121 and the sealing sub-assembly 122. The locking mechanism 123 comprises a first bayonet coupling 125 and a second bayonet coupling 126 in the form of a first slot 127 and a second slot 128, respectively, which are connected to each other by a transitional slot 129, which extends essentially in parallel to the longitudinal direction X. The second slot 128 opens in the longitudinal direction X at an insertion opening 130 in order to be able to take up a first pin 138 formed at the inner body 111 and a second pin of a mating enclosure assembly (see Figs. 9-13).

The inner body 111 provides at least a part of the interior space 107 of the enclosure assembly 100. On its side facing towards the sealing arrangement 122, the inner body 111 is provided with a flange adapted and arranged to support the sealing arrangement 122, in particular one of the washers 113 thereof, at the inner body 111. Counter latching elements 133 are formed in the wall of the inner body 111 as cut-outs for receiving retaining elements 134 of the spring retainer 112, in particular latching elements 135 thereof. The retaining elements 134 are formed as locking hooks extending away from a collar section of the spring retainer 112 essentially opposite to the longitudinal direction X and in parallel to the longitudinal axis S with a spring section 137 each. From each of the spring sections 137, one of the latching elements 135 extends away in a radial direction R extending radially around and perpendicularly away from the longitudinal axis S. Each of the retaining elements 134 is provided with an actuating organ 138, e.g. as shown herein in the form of a rounded-off tip of each of the latching elements 135 facing into the radial direction R and the longitudinal direction X.

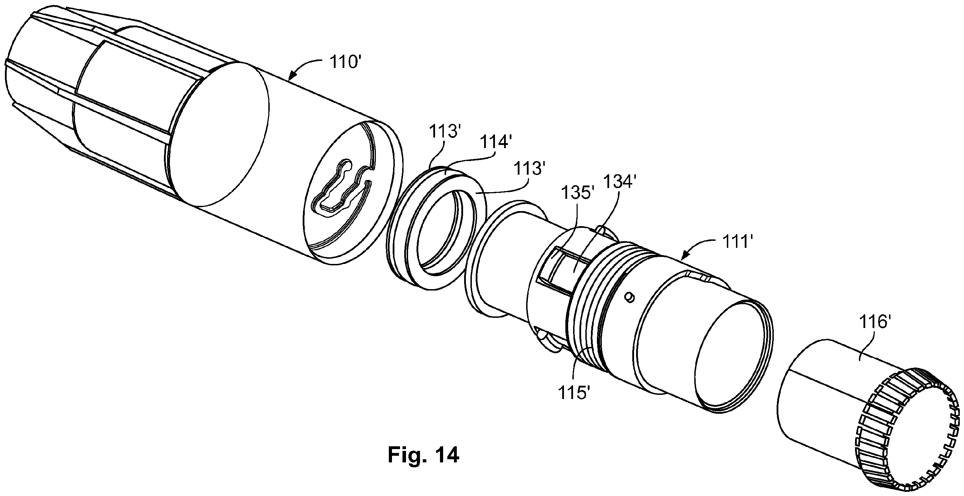

Analogously to Fig. 4, Fig. 14 shows another possible example of an enclosure assembly 100', i.e. its parts, according to the present application similar to that shown in Fig. 4. The enclosure assembly 100' comprises an outer shell 110', an inner body 111', two washers 113', a sealing element 114', a spring element 115' and a shielding element 116'. The inner body 111' has the features of the inner body 111 combined with those or the spring retainer 112 of the example of the enclosure assembly 100 illustrated in Fig. 4 integrated in one element. Latching and retaining elements 135', 134' are formed in or at the inner body 111'. The spring element 115 is arranged on the outer circumference of the inner spring body 111'.

Further, it becomes apparent in Fig. 4 that the spring element 115 encompasses the outer circumference of the inner body 111 and is supported with its front end 115a at a support 139 formed at the inner body 111 as a rim providing an edge facing against the longitudinal direction X. A rear end 115b of the spring element 115 faces opposite to the longitudinal direction X towards the outer shell 110. The shielding element 116 comprises a sleeve section 116a adapted to be inserted into the inner body 111 and a cuff 116b comprising multiple contact spring elements arranged annularly around the sleeve section 116a so that the shielding element 116 may be seated on a front rim 140 of the inner body 111, closely fitted on the front rim. In order to closely engaging the enclosure assembly 100 with a mating enclosure assembly (see Figs. 7 to 13) with a positive-fit, the inner body 111 is provided with a mating contour 141 facing essentially in the plug direction P and shaped complementary to a counter mating contour of the mating enclosure assembly (see Figs. 9 and 10).

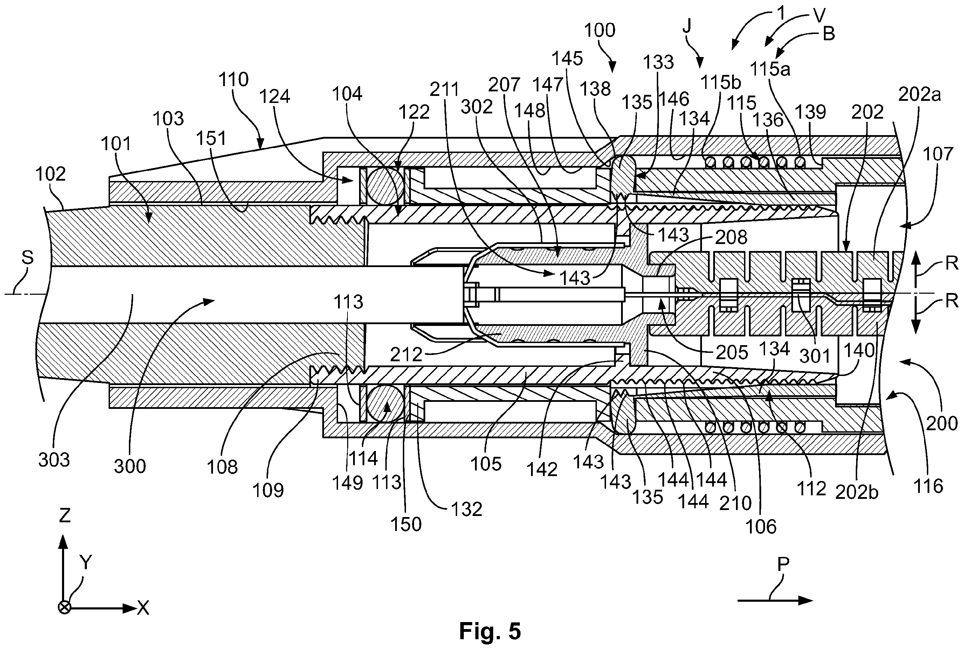

Fig. 5 shows the plug connector 1 with the enclosure assembly 100 in the pre-assembled state B and in a pre-locked position V. The telescoping sub-assembly 121 comprising the retainer bushing 104, the spring retainer 112 and the strain relief element 101 is received in the interior space 107 provided by the housing sub-assembly 120 comprising the outer shell 110 and the inner body 111. The inner body 111 and the sealing sub-assembly 122 are received within the volume 124 provided by the outer shell 110. The terminating arrangement 200 is received within the interior space 107.

The cable 300 is connected to the terminating arrangement 200 in that a strength member 302 of the cable surrounding the transmission lines 301 so that it is disposed between the transmission lines 301 and a sheath 303 of the cable is fixed to the fixator 207. Thereby, the cable 300 is held in a loose fit to the fixator 207. The fixator 207 has slots 212 to receive the strength members 302 and to pass them to the outside of the fixator 207. There the strength members 302 are fixed to the fixator 207 e.g. with glue. The glue or potting surrounds the space around the fixator 207 and is used for fixing the cable 300 at least via the strength members 302 to the fixator 207 and also seals the boot 101 to the cable.

Further, the cable 303 is guided by the strain relief element 101, especially in the region of the outside threading 108, screwed into the inner threading 109 of the retainer bushing 104 in the pre-assembled state B. The strain relief element 101 can be a "slide fit" boot; not water tight and not over-molded. The fixation member 208 of the fixator 207 is held within the holding structure 205 of the guiding support 202. Hence, strain relief for the transmission line 301 is provided between the point where it exits the sheath 303 of the cable 300 until it enters and is terminated within the connector 201 by the positive fit and/or frictional connection between the cable 300, in particular its strength member 302, and sheath 303, the fixator 207, the guiding support 202 and the connector 201. The fixator 207 is supported within the retainer bushing 104 in that the support element 210 abuts a counter support element 142 in the form of annular rim extending along the inner circumference of the retainer bushing 104, thus providing a narrowing within which the fixator 207 is seated.

The retainer bushing 104 is received with its retaining section 106 within the spring retainer 112. The end of the collar section 136 of the spring retainer 112 facing in the longitudinal direction X and the front rim 140 of the retainer bushing 104 are essentially aligned to each other in the height direction Z, i.e. are arranged essentially at the same level in the longitudinal direction X. Retaining organs, teeth or ribs 143 formed at each of the retaining elements 134 as e.g. teeth are held at a distance from counter retaining ribs 144 formed at the outer circumference of the retaining section 106 in the shape of ribs and/or teeth or a thread equally distanced from each other in parallel to the longitudinal direction X. The retaining ribs 143 are formed at the side of the latching elements 135 opposing the actuating organs 138 in the height direction Z, i.e. opposite to the radial direction R. Hence, by pressing on the actuating organs 138 opposite to the radial direction R, the retaining elements 134 are urged towards to the retaining section 106. Thereby, the retaining ribs 143 are brought into engagement with the counter retaining ribs 144, so that they overlap in a projection along the longitudinal direction X in order to inhibit movements of the retainer bushing 104 with respect to the spring retainer 112. The spring retainer 112 is secured against movements with respect to the inner body 104 in that the latching elements 135 are received within the counter latching elements 133. Hence, the spring retainer 112 is supported in and opposite to the longitudinal direction X at the inner body 104.

By moving the actuating organs 138 of the latching elements 134 opposite to the longitudinal direction X along the inner circumference of the outer shell 110, they run onto a bevel 145 extending along the inner circumference of the outer shell 110. The bevel 145 separates a release section 146 of the outer shell 110 from an actuating section 147 of the outer shell 110. The release section 146 has a smaller inner diameter than the actuating section 147. Hence, the inner circumference of the inner body 110 tapers at the bevel 145 in a direction opposite to the longitudinal direction X. When abutting the release section 146, the retaining ribs 143 are held at a distance in the radial direction R from the counter retaining ribs 144 and, hence, the enclosure assembly 100 is in an unretained state J.

For transferring the enclosure assembly 100 from the unretained state J into a retained state K, the latching elements 134, in particular the actuating organs 138 thereof, are to be removed from the release section 146 along the bevel 145 onto the actuating section 147 opposite to the longitudinal direction X. For achieving this movement, a spring force of the spring element 115 may have to be overcome, since it is supported with its front end 115a at the support 139 of the retainer bushing 104 on the one side and on a counter support (not shown) formed at the inner circumference of the outer shell 110 of the other side, thereby generating expanding spring forces between the outer shell 110 and the inner body 111, which may thus be urged away or out of the outer shell 110 in the longitudinal direction X. These spring forces may help in safely actuating the first bayonet coupling 125 constituted by the first slot 127 guiding the first pin 138.

Further, it becomes apparent in Fig. 5 that the sealing section 105 of the retainer bushing 104 is aligned with a counter sealing section 148 provided by the inner circumference of the outer shell 110 between the actuating section 147 and a stop 149, where the inner circumference of the outer shell 110 further narrows with respect to the sealing section 148. The sealing assembly 122 is arranged between the stop 149 and a pressing surface 150 provided by the flange 132 formed at the end of the inner body 111 facing opposite to the longitudinal direction X. The stop 149 is arranged between the counter sealing section 148 and a guiding section 151 of the outer shell 110. The holding section 103 of the strain relief element 101 and the sealing section 105 may at least in part be received in the guiding section 151 and encompassed thereby under a certain a clearance between the holding section 103 as well as the sealing section 105 on the one side and the guiding section 151 on the other side in the radial direction R, such that a certain play between them allows the telescoping sub-assembly 121 to be easily yet precisely replaced with respect to the housing sub-assembly 120 in and opposite to the longitudinal direction X.

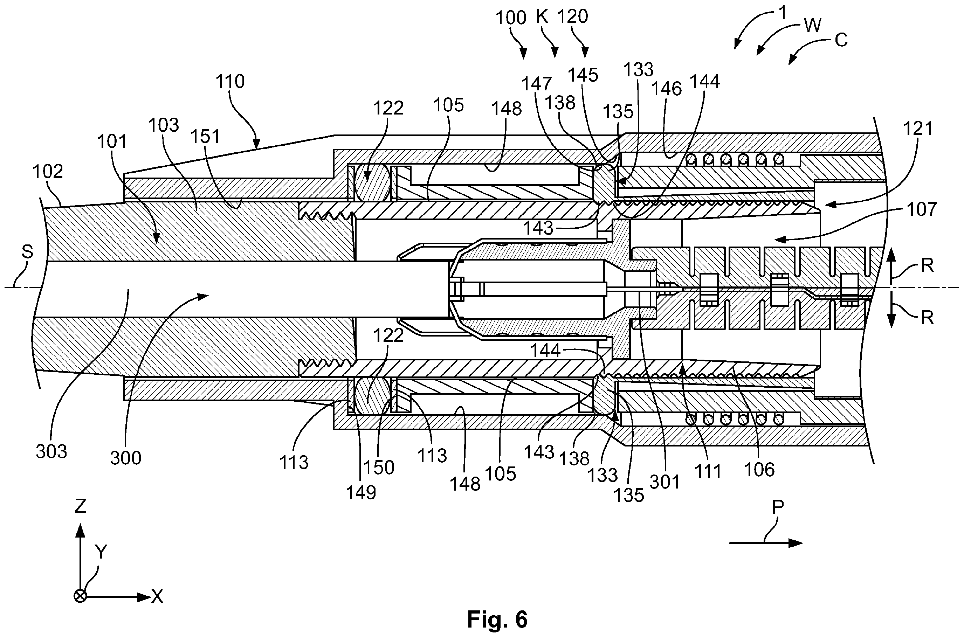

Fig. 6 shows the plug connector 1 with the enclosure assembly 100 in the fully assembled state C, where the enclosure assembly 100 is in a locked position W, and in the retained state K. In comparison to the pre-assembled state B, pre-locked position V and unretained position J, illustrated in Fig. 5, in the fully assembled state C, locked position W and retained state K, the telescoping sub-assembly 121 is moved with respect to the housing sub-assembly 120 opposite to the longitudinal direction X. Thereby, the latching element 135 within the counter latching element 133 are moved with their actuating organs 138 from the release section 146 over the bevel 145 onto the actuating section 147, which presses onto the actuating organs 138 and thus urges the retaining ribs 143 towards the counter retaining ribs 144. Thereby, the retaining ribs 143 are brought into mesh with the counter retaining ribs 144, so that they overlap with each other in the longitudinal direction X and prevent movements of the telescoping sub-assembly 121 with respect to the housing sub-assembly 120 in parallel to the longitudinal direction X.

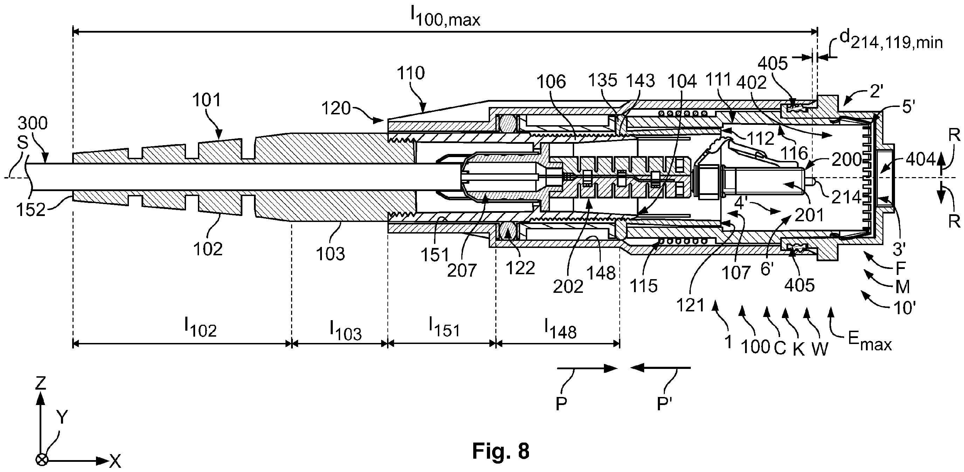

Further, the pressing surface 150 is simultaneously moved when transferring the enclosure assembly 100 from the unretained position J into the retained position K, so that the pressing surface 150 urges the sealing sub-assembly 122 against the stop 149. Thereby, the sealing element is compressed in parallel to the longitudinal direction X and thus expanded in the radial direction R. This elastical deformation of the sealing element 122 provides that it seals up between the housing sub-assembly 120 and the telescoping sub-assembly 121, in particular between the sealing section 105 and the counter sealing section 148 provided at the inner body 111 and the outer shell 110, respectively. In other words, the sealing sub assembly 122 seals up between the inner circumference of the outer shell 110 and the outer circumference of the inner body 105 in the vicinity of the guiding section 151, where the strain relief element 101 enters the interior space 107 of the enclosure assembly 100. The interior space 107 is sealed towards a rear side 152 of the enclosure assembly 100 (see Figs. 7 and 8).

Fig. 7 shows the connector assembly 10 according to an example of the present application in a final state F with the plug connector 1 and the mating plug connector 2 in a fully mated position M, wherein the enclosure assembly 100 is in a fully assembled state C, in the retained state K and a first retaining position Eₘᵢₙ, i.e. minimally expanded, illustrated in a schematic cross-sectional view along the longitudinal axis S. In the first retaining position Eₘᵢₙ, a distance d_{214,119,max} between a tip 214 of the connector201 and the front edge 119 of the outer shell and therefore the enclosure assembly 100 is maximal in the sense that the tip 214 just above the front edge 119 in the longitudinal direction X. In other words, the connector 201 is slightly moved out of the interior space 107 of the enclosure assembly 100 in the longitudinal direction X.

In the first retaining position Eₘᵢₙ, the enclosure assembly 100 has a minimal length l_{100,min}, measured in parallel to the longitudinal direction X. The minimal length l_{100,min} of the enclosure assembly 100 is essentially the sum of a length l₁₁₀ of the outer shell 110 and a length l₁₀₀ of the flexible section 102 of the strain relief element 101, both measured in parallel to the longitudinal direction X. The holding section 103 may be received with its entire length l₁₀₃ within the guiding section 151. The sealing assembly 122 may be arranged at a rear end position of the sealing section 105 at a length l₁₀₅ measured in parallel to the longitudinal direction X. The retaining organ 143 may be arranged at a rear end of the retaining section 106 having a length l₁₀₆ measured in parallel to the longitudinal direction X. An entire minimal connecting length l_{1,min} of the plug connector 1 may be regarded as the sum of the length l_{100,min} of the enclosure assembly 100 and the distance d_{214,119,max} between the tip 214 and the front edge 119.

Further, it becomes apparent in Fig. 7 that the mating plug connector 2 comprises a mating enclosure assembly 400 with a mating housing 401 providing a mating interior space accessible through a mating plug opening 403 in the plug direction P. In other words, the mating plug opening 403 is opening in a mating plug direction P' running opposite to the plug direction P. The mating plug connector 2 may be mated with the plug connector 1 by moving the mating plug connector 2 towards the plug connector 1 in the mating plug direction P'. In the fully mated stated M, the plug face 3 is in complementary engagement with the mating plug face 4. The plug portion 5 is plugged into the mating plug portion 6. The connector 201 may be arranged in the longitudinal direction X in a mating rear opening 404 formed at the end of the mating housing 401 facing away from the plug connector 1 in the longitudinal direction X.

For sealing up between the plug connector 1 and the mating plug connector 2, a mating sealing element 405 may be provided which may circumferentially encompass the mating plug portion 6 on the outside. The mating sealing element 405 may be formed as an annular seal. It may abut the enclosure assembly 100 along the inner circumference of the outer shell 110, especially in the region of the sealing collar 118. Thereby, the interior space 107 may be sealed up at the front by the mating sealing element 405 and at the back by the sealing arrangement 122. There is a third area that must be sealed; the boot 101 and retainer bushing 104 versus the cable. This is achieved by potting/gluing the space around the fixator 207. The step 117 and/or the front edge 119 may abut the mating enclosure assembly 400 in the longitudinal direction X. The mating plug portion 6 may at least in sections be arranged between the sealing collar 118 and the front rim 140 along the radial direction R, so that the mating plug portion 6 is closely fitting embedded between the outer shell 110 and the inner body 111 providing at least parts of the plug portion 5, so that a mechanically stable positive-fit and/or friction-fit connection between the plug element 1 and the mating plug element 2 is provided.

Fig. 8 shows the further example of the connector assembly 10' in a final state F with the plug connector 1 and the further example of the mating plug connector 2' in the fully mated position M, wherein the enclosure assembly 100 is in the fully assembled state C, in the retained state K in a second retaining position Eₘₐₓ, i.e. maximally expanded, illustrated in a schematic cross-sectional view along the central axis S analogously to the view shown in Fig. 7. In comparison to the first retaining position Eₘᵢₙ as shown in Fig. 7, it becomes apparent in Fig. 8 that the enclosure assembly 100 has a maximal length l_{100,max} exceeding the minimum length l_{100,min}. The tip 214 of the connector 201 is arranged under a minimal distance d_{214,119,min} with respect to the front edge 119, measured in parallel to the longitudinal direction X. The minimal distance d_{214,119,min} may be a negative distance, meaning that the tip 214 may be drawn behind the front edge 119 into the interior space 107 opposite to the longitudinal direction X. Thereby, the connector 1 provides the further example of the plug face 3' and the further example of the plug portion 5' and is hence adapted to the further example of the mating plug face 4' and the mating plug portion 6', respectively. The connector 201 may be held at a distance from the mating rear opening 404 in the longitudinal direction X.

Further, as shown in Fig. 8, in the second retaining position Eₘₐₓ, the holding section 103 is almost completely withdrawn from the guiding section 151 opposite to the longitudinal direction X. The retaining organ 143 is arranged at a front end of the retaining section 106, which is almost entirely withdrawn into the counter sealing section 148 opposite to the longitudinal direction X. A length l₁₄₈ of the counter sealing section 148 may essentially equal the length l₁₀₅ of the sealing section 105, both measured in parallel to the longitudinal direction X. A length l₁₅₁ of the guiding section 151 may essentially equal a length l₁₀₆ of the retaining section 106, both measured in parallel to the longitudinal direction X.

Fig. 9 shows a schematic perspective view of a mating enclosure assembly 400 according to an example of the present application suitable for different examples of mating plug connectors 2, 2' according to examples of the present application. The mating enclosure assembly 400 comprises the mating housing 401 providing the mating interior space 402 accessible through the plug opening 403 in the plug direction P and further mating rear opening 404 in the mating plug direction P'. The mating enclosure assembly 400 together with a desired and/or required example of a mating plug connector (not shown) provides the respective examples of the mating plug face 4, 4' and mating plug portion 6, 6'.

The mating plug opening 403 is formed in an essentially cylindrical mating sleeve 406 which extends from a plate-like mounting base 407 of the mating housing 401 in the mating plug direction P'. A mating contour 408 is formed at the mating sleeve 406 complementarily to the contour 401 of the enclosure assembly 100 of the plug element 1. The mating contour 408 may be formed by lugs 409 protruding from a front face of the mating sleeve 406 in the mating plug direction P' and forming between each other two cut-outs 411. Hence, the mating contour 408 may establish a positive fit with the contour 141, so that movements of the enclosure assembly 100, in particular of the body 111 in a turning direction T circumferentially encircling the longitudinal direction S in a mathematic positive turning movement within a plane extending essentially in parallel to the transverse direction Y and the height direction Z, may be inhibited.

Further, mating pins or second pins 412 may be provided at the mating plug portion 6, 6'. For example, four second pins 412 may be circumferentially distributed under equal distance to each other to the longitudinal axis S along the outer circumference of the mating plug portion 6, 6'. The second pins 412 may protrude from the mating plug portion 5, 5' in the radial direction R. For example, the second pins 412 may be arranged at the lugs 409. Two second pins 412 may be formed at each of the lugs 409. The second pins 412 are adapted and arranged to form at least a part of the of second bayonet coupling 126. They may be formed so as to be closely fitting guided within the second slot 128 in order to connect the enclosure assembly 100 to the mating enclosure assembly 400. The mating enclosure assembly 400 can also be used with only one cut-out 411 and two second pins 412 instead of two cut-outs and four pins respectively.

In order to retain the mating sealing element 405 at the mating enclosure assembly 400, it may be provided with a seating 413 in the form of a groove circumferentially extending around the mating plug portion 6, 6', in particular the mating sleeve 406. For mounting the mating enclosure assembly 400, the base may be provided with mounting elements 414, e.g. in the form of eyelets or through-holes for mounting the enclosure assembly 400 to an enclosure, housing or other parts of the electrical equipment, e.g. by means of screws or other elements enabling a positive-fit and/or friction fit.

Fig. 10 shows the mating enclosure assembly 400 for different embodiments of mating plug connectors 2, 2' in another schematic perspective view. Here it becomes apparent that the mating interior space 402 is accessible through the essentially rectangular mating rear opening 404, which extends essentially in plane extending in parallel to the transverse direction Y and the height direction Z. Thereby, a cage with a transceiver (not shown) may be placed within the mating rear opening 404 in a positive-fit manner so that movements of the mating connector with respect to the mating enclosure assembly 400 in or against the turning direction T may be inhibited. Further it becomes apparent in Fig. 10 that the mating rear opening 404 is formed at the back side of an extension 415 of the enclosure assembly 400, in particular of the mating housing 401. The extension 415 may be used in order to let the mating enclosure assembly 400 reach through a wall portion of electronic equipment (not shown).

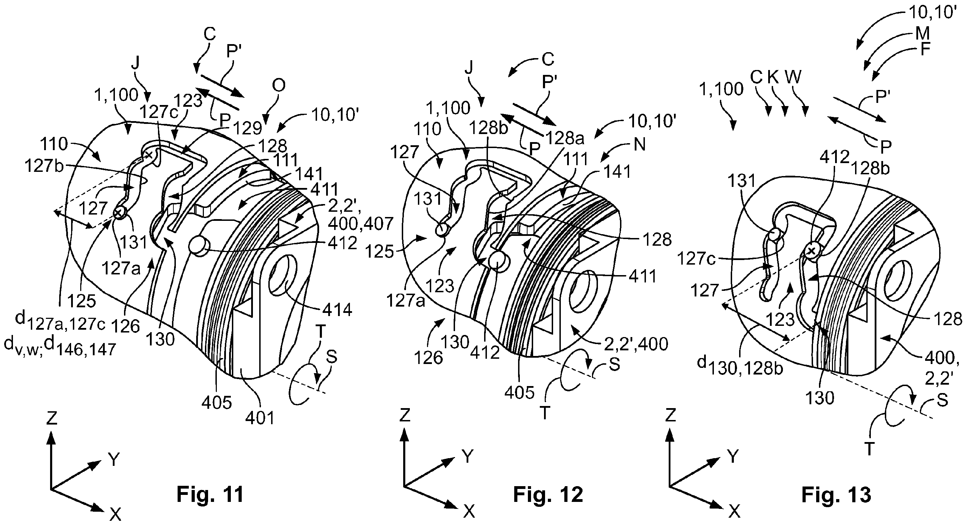

Fig. 11 shows a schematic perspective view of a detail of the connector assembly 10, 10' with the enclosure assembly 100 in a pre-locked position V in the unretained state J and with the mating enclosure assembly 400 in an unmated position O, where they may be brought into engagement with each other by movements with respect to each other in the plug direction P and unplug direction P', respectively. The first pin 131 is introduced through the insertion opening 130 into the locking mechanism 123, afterwards moved along the second slot 128, then along the transitional slot 129, from there into the first slot 127, and finally rests within a pre-locking end 127a of the first slot 127 after having passed a guidance 127b and a retaining structure 127c of the first slot 127. A distance d_{127a,127c} between the pre-locking end 127a and the retaining structure 127c measured essentially in parallel to the longitudinal direction X is essentially equal to a distance d_{146,147} between the release section 146 and the actuating section 147, measured essentially in parallel to the longitudinal direction X. Both distances d_{127a,127c} and d_{146,147} equal essentially a distance d_{VW} between the pre-locked position V and the locked position W. Hence, by turning the inner body 111 with respect to the outer shell 110 in the turning direction T, the first pin 131 may be moved out of the pre-locking end 127a along the guidance 127b into the retaining structure 127c and there the enclosure assembly 100 may be transferred from the pre-locked position V into the locked position W and hence from the unretained state J into the retained state K.

Fig. 12 shows a schematic perspective view of a detail of the locking mechanism 123 with the connector assembly 10, 10' in a pre-mated position N, where the enclosure assembly 100 is in the pre-locked position V and the unretained state J, while being partly brought into engagement with the mating enclosure assembly 400. In the pre-mated position N, the contour 141 and the mating contour 411 may be at least partly brought into engagement with each other. The second pin 412 may be placed within the insertion opening 130. For mating the connector assembly 10, 10' with the enclosure assembly 100, the internal cable assembly as shown in Fig. 2 is mated first, after that the housing sub-assembly 120, meaning the outer shell assembly with the outer shell 110 as shown in figure 4 is mated. So the mating is done sequentially. Then, in the pre-mated position N, the retaining position Eₘᵢₙ, Eₘₐₓ may be adjusted while the connector 201 can stay in correct engagement with the mating connector (not shown). In other words, the pre-mated position N with the enclosure assembly 100 in the release state K and the pre-locked position V may be a situation where the enclosure assembly 100 is in the fully assembled state C and, by moving the telescoping sub-assembly 121 with respect to the housing sub-assembly 120, the position of the terminating arrangement 200, especially of the tip 214 of the connector 201 with respect to the outer shell 110, may be adjusted by performing telescoping movements to provide the desired and/or required dimensions of the connector assembly 10, 10' in parallel to the longitudinal direction X, while the connector 201 is received within the enclosure assembly 100 and/or after being mated with the mating connector.

Fig. 13 is a schematic perspective view of a detail of the locking mechanism 123 of the connector assembly 10, 10' in the final state F. In the final state F, the enclosure assembly 100 and the mating enclosure assembly 400 and hence the plug connector 1 and the mating plug connector 2, 2' are in a fully mated position M. The enclosure assembly 100 is in the fully assembled state C, in the retained state K and locked position W. The pin 131 rests in the retaining structure 127c. The second pin 412 rests in a mating structure 128b of the second slot 128. The second pin 412 has moved out of its position in the insertion opening 130 shown in Fig. 12 along a mating guidance 128a of the second slot 128. Thereby, the second pin 412 has travelled a distance d_{130,128b} between the insertion opening 130 and the mating structure 128b in parallel to the longitudinal direction X, which essentially equals the distance d_{127a,127c} between the pre-locking end 127a and the retaining structure 127c. The guidance 127b and the mating guidance 128a may have essentially the same length, thereby enabling the first pin 131 and the second pin 412 to simultaneously travel essentially along the same distance when transferring the enclosure assembly 100 from the pre-locking position V into the locked position W and at the same time bringing the connector assembly 10, 10' from the pre-mated position N into the fully mated position M.

Deviations from the above-described examples of a connector assembly 10, 10' comprising a plug connector 1, mating plug connector 2, 2' and enclosure assembly 100, 100', mating enclosure assembly 400, respectively, according to the present application, are possible without departing from the inventive idea. The plug connector 1 may be designed as a plug-element or plug with a plug face 3, 3' and a plug portion 5, 5', which may be adapted to respective mating connectors 2, 2', which be provided as mating plug-elements or receptacles having mating plug faces 4, 4' and mating plug portions 6, 6', as desired for a certain application.

An enclosure assembly 100, 100' according to examples of the present application may comprise strain relief elements 101, flexible sections 102, holding sections 103, retainer bushing 104, sealing sections 105, retaining sections 106, interior spaces 107, outside threadings 108, inner threadings 109, outer shells 110, inner bodies 111, spring retainers 112, washers 113, sealing elements 114 and shielding elements 116, steps 117, sealing collars 118, front edges 119 in whatever number and form desired in order to provide a housing sub-assembly 120, a telescoping sub-assembly 121 and sealing sub-assembly 122 of the invention and/or a locking mechanism 123 according to the respective examples of the present application. They may be formed and shaped as desired and provided with volumes 124, first bayonet couplings 125, second bayonet couplings 126, first slots 127 with pre-locking ends 127a, guidances 127b, retaining structures 127c, second slots 128 with mating guidances 128a, mating structures 128b as well as flanges 132, counter latching elements 133, retaining elements 134, latching elements 135, collar sections 136, spring sections 137, actuating organs 138, supports, 139, front rims 140, contours 141, counter support elements 142, retaining organs 143, counter retaining organs 144, bevels 145, release sections 146, actuating sections 147, counter sealing sections 148, counter sealing sections, stops 149, pressing surfaces 150, guiding sections 151 and/or rear sides 152 in whatever number and form required for a certain application.

A terminating arrangement 200 according to an exampleof the present application may comprise connectors 201, guiding supports 202 with upper shells 202a, lower shells 202b, seatings 203, mounting sections 204, holding structures 205, channels 206, fixators 207, fixation members 208, , support elements 210, through-holes 211, slot 212, and/or tips 214 in whatever number and form required for terminating a cable 300, which may comprise transmission lines 301, strength members 302 and/or sheaths 303 in whatever number and form required for a desired application.

A mating enclosure assembly 400 according to an example of the present application may comprise mating housings 401, mating interior spaces 402, mating plug openings 403, mating rear openings 404, mating sealing elements 405, mating sleeves 406, mounting bases 407, mating contours 408, lugs 409, front faces 410, cut-outs 411, mating pins 412, seatings 413, mounting elements 414 and/or extensions 415 in whatever number and form required for a desired application.

### Reference Signs

- 1: plug element/connector
- 2, 2': mating plug element/connector
- 3, 3': plug face
- 4, 4': mating plug face
- 5, 5': plug portion (plug)
- 6, 6': mating plug portion (receptacle)
- 10, 10': connector assembly
- 100, 100': enclosure assembly
- 101: strain relief element
- 102: flexible section
- 103: holding section
- 104: retainer bushing
- 105: sealing section
- 106: retainer section
- 107: interior space
- 108: outside threading
- 109: inner threading
- 110: outer shell
- 111, 111': inner body
- 112: spring retainer
- 113, 113': washer
- 114, 114': sealing element
- 115, 115': spring element
- 115a: front end of spring element
- 115b: rear end of spring element
- 116, 116': shielding element
- 116a: sleeve section
- 116b: cuff
- 117: step
- 118: sealing collar
- 119: front edge
- 120: housing sub-assembly
- 121: telescoping sub-assembly
- 122: sealing sub-assembly
- 123: locking mechanism
- 124: volume
- 125: first bayonet coupling
- 126: second bayonet coupling
- 127: first slot
- 127a: pre-locking end
- 127b: guidance
- 127c: retaining structure
- 128: second slot
- 128a: mating guidance
- 128b: mating structure
- 130: insertion opening
- 132: first pin
- 133: counter latching elements
- 134: retaining elements
- 135: latching element
- 136: collar section
- 137: spring section
- 138: actuating organ
- 139: support
- 140: front rim
- 141: contour
- 142: counter support element
- 143: retaining organ/tooth
- 144: counter retaining organ/rib
- 145: bevel
- 146: release section
- 147: actuating section
- 148: counter sealing section
- 149: stop
- 150: pressing surface
- 151: guiding section
- 152: rear side
- 200: terminating arrangement
- 201: connector/terminal
- 202: guiding support
- 202a: upper shell of guiding support
- 202b: lower shell of guiding support
- 203: seating
- 204: mounting section
- 205: holding structure
- 206: channel
- 207: end connector adapter part/ fixator/ end cap
- 208: fixation member
- 210: support element/collar/flange
- 211: through-hole
- 212: tube portion / slot
- 214: tip of connector/terminal
- 300: cable
- 301: transmission line
- 302: strength member
- 303: sheath
- 400: mating enclosure assembly
- 401: mating housing
- 402: mating interior space
- 403: mating plug opening
- 404: mating rear opening
- 405: mating sealing element
- 406: mating sleeve
- 407: mounting base
- 408: mating contour
- 409: lug
- 410: front face
- 411: cut-out
- 412: mating pin/second pin
- 413: seating
- 414: mounting element
- 415: extension
- A: unassembled state
- B, B': pre-assembled state
- C: fully assembled state
- Emin: first retaining position/minimally expanded
- Emax: second retaining position/maximally expanded
- F: final state
- J: unretained state
- K: retained state
- O: unmated position
- N: pre-mated position
- M: fully mated position
- U: unlocked position
- V: pre-locked position
- W: locked position
- R: radial direction
- S: axial direction/central axis/longitudinal axis
- P, P': plug direction/mating plug direction
- T: turning direction
- X: longitudinal direction
- Y: transverse direction
- Z: height/vertical direction
- l1,min: minimal length of plug connector
- l1,max: maximal length of plug connector
- l100,min: minimal length of enclosure assembly
- l100,max: maximal length of enclosure assembly
- 1102: length of flexible section
- 1103: length of holding section
- l105: length of sealing section
- l106: length of retaining section
- l110: length of outer shell
- l148: length of counter sealing section
- l151: length of guiding section
- d214,119,max: maximal distance between tip 214 and front edge 119
- d214,119,min: minimal distance between tip 214 and front edge 119
- d146,147: distance between release section 146 and actuating section 147
- dV,W: distance between pre-locked position V and locked position W

## Claims

1. Kit comprising:
- at least one sealing sub-assembly (122) for an enclosure assembly (100, 100') for mounting at various depth positions in the enclosure assembly (100, 100') and for receiving at least one connector (201) terminating a data and/or power transmission line (301), the sealing sub-assembly (122) comprising at least one annular sealing element (114) and at least one washer (113); and
- an inner body (111) of a housing sub-assembly (120), said inner body being provided with a flange (132) adapted and arranged to support the sealing sub-assembly (122), in particular one of the washers (113) thereof, wherein the flange (132) is formed at an end of the inner body (111) and provides a pressing surface (150); **characterized in that** the kit further comprises:
- an outer shell (110) of the housing sub-assembly (120), the outer shell (110) being configured to at least in sections take up the inner body (111) and comprising a volume (124) for receiving the sealing sub-assembly (122), wherein the outer shell (110) comprises a counter sealing section (148) provided by an inner circumference of the outer shell (110) and a stop (149), where the inner circumference of the outer shell (110) narrows with respect to the sealing section (148).

2. Kit according to claim 1, wherein the sealing sub-assembly (122) comprises at least two washers (113) with at least one sealing element (114) arranged between the washers (113).

3. Kit according to any one of claims 1 to 2, wherein the sealing sub-assembly (122) is configured to be arranged concentrically to a middle axis of the enclosure assembly (100, 100').

4. Kit according to any one of claims 1 to 3, wherein the at least one annular sealing element (114) of the sealing sub-assembly (122) is expandable in a radial direction.

5. Kit according to claim 2, wherein the sealing sub-assembly (122) comprises two washers (113) and one sealing element (114) between the washers (113).

## Patentansprüche

1. Bausatz umfassend:
- mindestens eine Dichtungsunterbaugruppe (122) für eine Gehäusebaugruppe (100, 100') zur Montage an verschiedenen Tiefenpositionen in der Gehäusebaugruppe (100, 100') und zur Aufnahme mindestens eines Verbindungsstücks (201), das eine Daten- und/oder Energieübertragungsleitung (301) abschließt, wobei die Dichtungsunterbaugruppe (122) mindestens ein ringförmiges Dichtungselement (114) und mindestens eine Unterlegscheibe (113) umfasst, und
- einen inneren Körper (111) einer Gehäuseunterbaugruppe (120), wobei der innere Körper mit einem Flansch (132) versehen ist, der angepasst und angeordnet ist, um die Dichtungsunterbaugruppe (122), insbesondere eine der Unterlegscheiben (113) davon, zu stützen, wobei der Flansch (132) an einem Ende des inneren Körpers (111) ausgebildet ist und eine Druckfläche (150) bereitstellt; **dadurch gekennzeichnet, dass** der Bausatz ferner umfasst:
- eine Außenschale (110) der Gehäuseunterbaugruppe (120), wobei die Außenschale (110) zum zumindest abschnittsweisen Aufnehmen des Innenkörpers (111) ausgebildet ist und ein Volumen (124) zum Aufnehmen der Dichtungsunterbaugruppe (122) umfasst, wobei die Außenschale (110) einen Gegendichtungsabschnitt (148), der von einem Innenumfang der Außenschale (110) bereitgestellt wird, und einen Anschlag (149) umfasst, wobei sich der Innenumfang der Außenschale (110) gegenüber dem Dichtungsabschnitt (148) verengt.

2. Bausatz gemäß Anspruch 1, wobei die Dichtungsunterbaugruppe (122) mindestens zwei Unterlegscheiben (113) mit mindestens einem zwischen den Unterlegscheiben (113) angeordneten Dichtungselement (114) umfasst.

3. Bausatz gemäß einem der Ansprüche 1 bis 2, wobei die Dichtungsunterbaugruppe (122) zur konzentrischen Anordnung zu einer Mittelachse der Gehäusebaugruppe (100, 100') ausgebildet ist.

4. Bausatz gemäß einem der Ansprüche 1 bis 3, wobei das mindestens eine ringförmige Dichtungselement (114) der Dichtungsunterbaugruppe (122) in radialer Richtung ausdehnbar ist.

5. Bausatz gemäß Anspruch 2, wobei die Dichtungsunterbaugruppe (122) zwei Unterlegscheiben (113) und ein Dichtungselement (114) zwischen den Unterlegscheiben (113) umfasst.

## Revendications

1. Kit comprenant :
au moins un sous-ensemble d'étanchéité (122) pour un assemblage de boîtier (100, 100') à monter à différents emplacements de profondeur dans l'assemblage de boîtier (100, 100') et pour recevoir au moins un connecteur (201) terminant une ligne de transmission de données et/ou d'énergie (301), le sous-ensemble d'étanchéité (122) comprenant au moins un élément d'étanchéité annulaire (114) et au moins une rondelle (113) ; et
un corps intérieur (111) d'un sous-assemblage de boîtier (120), ledit corps intérieur étant doté d'une bride (132) adaptée et disposée pour soutenir le sous-ensemble d'étanchéité (122), en particulier une des rondelles (113) de celui-ci, dans lequel la bride (132) est formée à une extrémité du corps intérieur (111) et fournit une surface de pression (150) ; **caractérisé en ce que** le kit comprend en outre :
une coque extérieure (110) du sous-ensemble d'étanchéité (120), la coque extérieure (110) étant configurée pour au moins dans des sections accueillir le corps intérieur (111) et comprenant un volume (124) pour recevoir le sous-ensemble d'étanchéité (122), dans lequel la coque extérieure (110) comprend une section de contre-étanchéité (148) fournie par une circonférence intérieure de la coque extérieure (110) et une butée (149), où la circonférence intérieure de la coque extérieure (110) se rétrécit par rapport à la section d'étanchéité (148).

2. Le kit selon la revendication 1, dans lequel le sous-ensemble d'étanchéité (122) comprend au moins deux rondelles (113) avec au moins un élément d'étanchéité (114) disposé entre les rondelles (113).

3. Le kit selon l'une quelconque des revendications 1 et 2, dans lequel le sous-ensemble d'étanchéité (122) est configuré pour être disposé concentriquement à un axe médian de l'assemblage de boîtier (100, 100').

4. Le kit selon l'une quelconque des revendications 1 à 3, dans lequel l'au moins un élément d'étanchéité annulaire (114) du sous-ensemble d'étanchéité (122) est extensible dans une direction radiale.

5. Le kit selon la revendication 2, dans lequel le sous-ensemble d'étanchéité (122) comprend au moins deux rondelles (113) et un élément d'étanchéité (114) disposé entre les rondelles (113).
